# EUROPÄISCHE PATENTSCHRIFT

(11) **EP 4 034 373 B1**
(45) Veröffentlichungstag und Bekanntmachung des Hinweises auf die Patenterteilung: **13.11.2024**
(21) Anmeldenummer: 20772203.4
(22) Anmeldetag: 26.08.2020
(51) Int. Cl.: B29D 30/32, B29D 30/24

(54) **TROMMEL UND VERFAHREN ZUR HERSTELLUNG VON FAHRZEUGREIFEN**
DRUM AND METHOD FOR PRODUCING VEHICLE TYRES
TAMBOUR ET PROCÉDÉ POUR LA PRODUCTION DE PNEUS DE VÉHICULES

(30) Priorität: 25.09.2019 DE 102019125765
(43) Veröffentlichungstag der Anmeldung: 03.08.2022
(73) Patentinhaber: Herbert Maschinen- und Anlagenbau GmbH & Co. KG, 36088 Hünfeld (DE)
(72) Erfinder: POPP, Sebastian, 36100 Petersberg (DE)
(74) Vertreter: advotec.
(86) Internationale Anmeldenummer: PCT/EP2020/073863
(87) Internationale Veröffentlichungsnummer: WO 2021/058224

(56) Entgegenhaltungen:
- EP-A2- 0 808 707
- EP-A2- 1 295 704
- WO-A1-2019/130189
- DE-B3- 102008 032 382
- DE-C- 971 039
- GB-A- 913 599
- US-A- 2 409 974
- US-A- 2 931 420
- US-A- 3 237 199
- US-A- 3 695 974
- US-A1- 2017 326 826

## Beschreibung

Die Erfindung betrifft eine Trommel sowie ein Verfahren zur Herstellung von Fahrzeugreifen, insbesondere Reifen für Fahrräder, Motorräder, Roller oder dergleichen, wobei die Trommel eine Klemmvorrichtung mit Mittensegmenten zum Halten eine Reifenkarkasse und zumindest eine Umschlagvorrichtung zum Umschlagen eines Seitenwandstreifens der Reifenkarkasse über einen Wulstkern des Reifens umfasst, wobei die Umschlagvorrichtung eine Hebeleinrichtung umfasst, wobei die Hebeleinrichtung eine Mehrzahl Hebel aufweist, mittels derer der Seitenwandstreifen umschlagbar ist, wobei die Mittensegmente in Richtung einer Längsachse der Trommel eine axiale Länge A aufweisen, wobei die Hebel eine Länge A' aufweisen, wobei die Länge A' der Hebel größer oder gleich der Länge A der Mittensegmente ist.

Trommeln der eingangs genannten Art sind bereits hinlänglich bekannt. So zeigt beispielsweise die DE 10 2011 077 569 A1 eine Trommel zur Herstellung eines Fahrzeugreifens, welche eine kreiszylindrische Trommeleinheit mit kreisbogenförmigen Mittensegmenten umfasst. Die Mittensegmente können in radialer Richtung quer zu einer Rotationsachse der Trommel bewegt werden, sodass ein Außendurchmesser der Trommeleinheit verändert wird. Eine auf der Klemmvorrichtung angeordnete Reifenkarkasse ist durch eine derartige radiale Expansion der Klemmvorrichtung mit einem Wulstkern verspannbar bzw. verklemmbar.

Auch ist bekannt, dass bei der Herstellung eines Fahrzeugreifens Seitenwandstreifen der Reifenkarkasse über Wulstkerne auf der Trommel umgeschlagen werden. Die Wulstkerne werden dabei zusammen mit der Reifenkarkasse auf der Trommel angeordnet und der Umschlag erfolgt über eine Hebeeinrichtung. Dabei ist vorgesehen, dass der Seitenwandstreifen der Reifenkarkasse den Wulstkern abdeckt, wobei dieser in seiner Position im späteren Rohling des Fahrzeugreifens fixiert wird, um dabei einen möglichst sparsamen Überlappungsbereich der aufeinander aufliegenden Flächen des Seitenwandstreifens der Reifenkarkasse zu erzielen. Nachteilig ist hierbei, dass durch einen nicht ausreichenden Umschlag des Seitenwandstreifens zu einem Loslösen oder einem Verrutschen des Wulstkerns kommen kann. Zudem können bei einem ungleichen Umschlag des Seitenwandstreifens Unregelmäßigkeiten in der Lauffläche des Reifens auf der Fahrbahn entstehen, wenn durch schräg liegende Bereiche des Seitenwandstreifens der Reifenkarkasse in Folge eines fehlerhaften Umschlags Unregelmäßigkeiten in einer Dicke des späteren Reifens entstehen.

Aus der US 2 931 420 ist eine Reifenbaumaschine mit einer Trommel, die an einer Welle gelagert ist, und mit einer Klemmvorrichtung, die Mittensegmente aufweist, bekannt. Die Trommel weist weiter eine Umschlagvorrichtung mit acht Hebeln auf, die äquidistant einer Nabe an der Welle positioniert sind. An jeweiligen Hebelenden der Hebel befinden sich Schraubenfedern, die gemeinsam einen einen Außendurchmesser der Trommel umfassenden Ring ausbilden. Die Trommel ist mit Hilfe eines Luftkissens radial expandier- und mit Hilfe eines Gummibands kollabierbar.

Der vorliegenden Erfindung liegt daher die Aufgabe zugrunde, eine Trommel sowie ein Verfahren zur Herstellung eines Fahrzeugreifens vorzuschlagen, durch die bzw. das ein Fahrzeugreifen mit hoher Qualität und kostengünstig herstellbar ist.

Diese Aufgabe wird durch eine Trommel mit den Merkmalen des Anspruchs 1 sowie durch ein Verfahren mit den Merkmalen des Anspruchs 18 gelöst.

Die erfindungsgemäße Trommel zur Herstellung von Fahrzeugreifen, insbesondere Reifen für Fahrräder, Motorräder, Roller oder dergleichen, umfasst dabei eine Klemmvorrichtung mit Mittensegmenten zum Halten einer Reifenkarkasse und zumindest eine Umschlagvorrichtung zum Umschlagen eines Seitenwandstreifens der Reifenkarkasse über einen Wulstkern des Reifens, wobei die Umschlagvorrichtung eine Hebeleinrichtung umfasst, wobei die Hebeleinrichtung eine Mehrzahl Hebel aufweist, mittels derer der Seitenwandstreifen umschlagbar ist, wobei die Mittensegmente in Richtung einer Längsachse der Trommel eine axiale Länge A aufweisen, wobei die Hebel eine Länge A' aufweisen, wobei die Länge A' der Hebel größer oder gleich der Länge A der Mittensegmente ist, wobei der Seitenwandstreifen mittels der Hebel über die gesamte Länge A der Mittensegmente umschlagbar ist, wobei die Hebeleinrichtung eine Mehrzahl Führungselemente aufweist, wobei die Führungselemente zwischen den Hebeln der Hebeleinrichtung angeordnet sind.

Bei der erfindungsgemäßen Trommel ist dabei besonders vorteilhaft, dass der Umschlag des Seitenwandstreifens der Reifenkarkasse über die gesamte Länge der Mittensegmente hinweg erfolgt. Bei einem derartigen Umschlag befindet sich der Rand des Seitenwandstreifens ebenfalls am Rand der Mittensegmente und damit nicht in der Mitte der Mittensegmente, welche einer späteren Position einer auf einer Fahrbahn aufliegenden Fläche des Reifens entspricht. Somit kann vermieden werden, dass ein Rand des Seitenwandstreifens auf der späteren, auf der Fahrbahn aufliegenden Fläche des Reifens Unebenheiten hervorruft, wodurch das Laufverhalten des späteren Reifens beeinträchtigt werden kann.

Weiterhin sorgt ein Umschlag eines Seitenwandstreifens der Reifenkarkasse über die gesamte Länge der Mittensegmente dafür, dass der Wulstkern in einen breiten Materialstreifen der Reifenkarkasse eingebettet ist. Dies sorgt für eine besonders stabile Positionierung des Wulstkerns innerhalb der Reifenkarkasse bzw. des späteren Reifens. Zudem entsteht bereits zu einem frühen Fertigungsschritt des Reifens ein mehrlagiger Reifenrohling, da durch den Umschlag des Seitenwandstreifens der Reifenkarkasse über die gesamte Länge der Mittensegmente bereits eine zweite vollständige Lage eines Materials des Reifenrohlings aufgetragen wird. Dies ist besonders vorteilhaft, wenn dünnschichtige Reifen bzw. Reifen mit einer geringen Anzahl Materialschichten hergestellt werden, da so bereits zu Beginn des frühen Herstellungsverfahrens vollständige Schichten des späteren Reifenrohlings aufgetragen werden können. Demnach kann der Materialstreifen der Reifenkarkasse von einem Wulstkern zum anderen Wulstkern umgeschlagen werden, wodurch man eine zusätzliche Lage eines Materialstreifens einsparen kann.

Die Ausbildung der Hebel mit einer Länge, welche die Länge der Mittensegmente übersteigt, hat darüber hinaus den Vorteil, dass eine Wandbreite von Seitenwandstreifen der Reifenkarkasse für einen Umschlag vorgesehen sein kann. Beispielsweise kann ein breiterer Seitenwandstreifen über die gesamte Länge der Mittensegmente umgeschlagen werden oder ein dünnerer bzw. schmalerer Seitenwandstreifen nur über eine Teillänge der Mittensegmente umgeschlagen werden. Je nach Art und Beschaffenheitsanforderung der zu fertigenden Reifen ist es daher möglich, eine geeignete Breite des Seitenwandstreifens der Reifenkarkasse umzuschlagen, was jeweils durch die Breite des Seitenwandstreifens der Reifenkarkasse sowie die Länge der Mittensegmente festgelegt werden kann.

Erfindungsgemäß weist die Hebeleinrichtung eine Mehrzahl Führungselemente auf, wobei die Führungselemente zwischen den Hebeln der Hebeleinrichtung angeordnet sind. Die Führungselemente können ebenfalls eine kreisbogenförmige Krümmung aufweisen, die an die Krümmung der Mittensegmente angepasst ist. Dies begünstigt eine gleichmäßige Führung des Seitenwandstreifens der Reifenkarkasse während einer Umschlagsbewegung.

Es ist dabei besonders vorteilhaft, wenn die Trommel einen ersten Satz Mittensegmente sowie einen zweiten Satz Mittensegmente umfasst, wobei der erste Satz Mittensegmente eine Länge A₁ und der zweite Satz Mittensegmente eine Länge A₂ aufweisen kann, wobei A₁ ungleich A₂ sein kann. Die Mittensegmente der Klemmvorrichtung können beispielsweise durch Schrauben auf der Trommel montiert sein und so einzeln von dieser entfernt werden. Dabei kann vorgesehen sein, dass verschiedene Sätze Mittensegmente mit verschiedenen Längen A auf der Trommel montierbar sind. Hierbei ist jedoch die Länge A der Mittensegmente innerhalb eines Mittensegmentsatzes auf der Trommel stets gleich, sodass die spätere Breite des Reifenrohlings und damit die spätere auf der Fahrbahn aufliegende Fläche des Reifens in allen Segmentabschnitten gleich ist. Wenn die Mittensegmentsätze austauschbar ausgebildet sind, kann besonders einfach von der Produktion eines breiteren Reifens beispielsweise auf die Produktion eines schmaleren Reifens umgestellt werden, da hierfür lediglich die Mittensegmentsätze ausgetauscht werden müssen.

Hierbei ist vorteilhaft, wenn die Länge A der Mittensegmente 20 bis 400 mm, vorzugsweise 40 bis 300 mm, besonders bevorzugt 48 bis 200 mm, ist. Mit einer derartigen verfügbaren Bandbreite von Mittensegmenten ist es möglich, Reifen für Fahrräder, Motorräder, Roller oder dergleichen, herzustellen. Auch können beispielsweise unterschiedlich breite Fahrradreifen bzw. Reifen für verschiedene Motorradtypen hergestellt werden, da ein Satz Mittensegmente mit einer Länge in den oben angegebenen Bereichen mit einem weiteren Satz Mittensegmente einer anderen Länge einfach austauschbar ist.

Weiter ist vorteilhaft, wenn die Mittensegmente eine rechteckige Grundfläche aufweisen, wobei die Mittensegmente derart gebogen sind, dass sie einen Teil eines Außenmantels eines Zylinders ausbilden können. Dadurch kann die Trommel im Bereich der Mittensegmente eine kreisförmige Querschnittsfläche und damit eine kreisrunde Zylinderform aufweisen. Dies kann die Herstellung eines runden Fahrzeugreifens begünstigen. Die Mittensegmente können dabei so aneinander gelagert werden, dass kein wesentlicher Spalt zwischen den Mittensegmenten offen bleibt, in dem sich Material verklemmen kann.

Ferner ist von Vorteil, wenn die Klemmvorrichtung zumindest einen Zylinder, vorzugsweise zwei oder mehr Zylinder, zur radialen Expansion der Mittensegmente aufweist. Die radiale Expansion der Mittensegmente kann dabei dazu verwendet werden, eine auf der Trommel angeordnete Reifenkarkasse mit einem auf der Reifenkarkasse aufgelegten Wulstkern zu verklemmen. Reifenkarkasse und Wulstkern können dabei in einer gewünschten Position fixiert werden, sodass sie bei einer Weiterverarbeitung zu einem Reifenrohling nicht verrutschen können. Die Wulstkerne können dabei auch in Nuten von Seitensegmenten eingelegt sein und von diesen entsprechend geklemmt werden.

Auch ist es von Vorteil, wenn die expandierten Mittensegmente der Klemmvorrichtung durch den Zylinder und/oder zumindest eine Feder rückholbar sind. Nach Beendigung des Herstellungsverfahrens des Reifens unter Verwendung der Trommel kann es erforderlich sein, die expandierten Mittensegmente in den ursprünglichen Zustand zurückzuholen, d.h. zu kollabieren, damit der fertige Reifenrohling von der Trommel abgenommen werden kann. Hier ist es besonders von Vorteil, wenn der Zylinder zur Expansion der Mittensegmente gleichzeitig auch das Kollabieren der Mittensegmente durchführt und somit doppelt wirken kann. Alternativ kann auch eine Federzurückholung der Mittensegmente verwendet werden. Hierfür kann eine Spiralfeder vorgesehen sein.

Die Klemmvorrichtung der Trommel kann vorteilhaft Seitensegmente aufweisen, die an axialen Rändern der Mittensegmente angeordnet sein können, wobei eine Position der Seitensegmente in Richtung der Längsachse einstellbar sein kann. Die Seitensegmente können dabei derart an den Mittensegmenten angeordnet sein, dass ihre Oberfläche schräg zur Oberfläche der Mittensegmente steht. Dies bewirkt, dass die Hebel der Umschlagvorrichtung leicht auf die Seitensegmente und dann auf die Mittensegmente aufgleiten können, wenn ein Umschlag durchgeführt wird. Dies verhindert, dass die Hebel an den Rand der expandierten Mittensegmente anstoßen und der Umschlag dadurch behindert wird. Weiterhin kann die Position der Seitensegmente in Richtung der Längsachse der Trommel einstellbar und damit veränderbar sein. Dies ist von Vorteil, wenn ein neuer Satz Mittensegmente eingesetzt werden soll, dessen Länge sich von der Länge des vorherigen Satzes Mittensegmente unterscheidet. Die Seitensegmente können dann entlang der Längsachse verschoben werden und in einer neuen Position fixiert werden. Hierbei werden die Seitensegmente derart an den Mittensegmenten angeordnet, dass zwischen den Seitensegmenten und den Mittensegmenten kein wesentlicher Spalt entstehen kann, in welchen Material der Reifenkarkasse eindringen und verklemmt werden kann. Die Seitensegmente können mit Nuten ausgebildet sein, so dass Wulstkerne in die Nuten eingelegt werden können. Folglich können die Wulstkerne von den Seitensegmenten geklemmt werden.

Vorteilhaft können die Seitensegmente zusammen mit den Mittensegmenten radial expandierbar und/oder rückholbar sein. Dadurch können die Seitensegmente besonders einfach durch einen Zylinder bzw. eine Feder, mit denen auch die Mittensegmente expandiert bzw. rückgeholt werden, betätigt werden. Bei der Expansion der Seitensegmente zusammen mit den Mittensegmenten wird zudem verhindert, dass wiederum eine scharfe Kante zwischen Mittensegmenten und Seitensegmenten gebildet werden kann, welche das Aufgleiten der Hebel beim Umschlagen behindern kann.

Es ist von Vorteil, wenn die Umschlagvorrichtung eine Betätigungseinrichtung mit zumindest einem Zylinder, bevorzugt zwei Zylindern, besonders bevorzugt vier Zylinder aufweist, wobei durch den Zylinder die Hebel der Hebeleinrichtung in Richtung der Längsachse der Trommel bewegbar sein können. In einer besonders einfachen Ausführungsform der Trommel kann es vorgesehen sein, dass der Umschlag manuell also durch eine Bedienperson durchgeführt wird, welche die Hebel entlang der Längsachse bewegt. In einer vorteilhaften Ausführungsform kann jedoch für die Umschlagsbewegung zumindest ein Zylinder, beispielsweise ein Pneumatikzylinder, vorgesehen sein. Auch können zwei oder vier oder eine andere Anzahl Zylinder vorgesehen sein, um eine Umschlagskraft während des Umschlages zu steigern. Dies kann vorteilhaft sein, wenn die Reifenkarkasse beispielsweise aus einem dickeren Material ausgebildet ist oder ein größerer Reifen hergestellt werden soll.

Hierbei ist von Vorteil, wenn die Betätigungseinrichtung ein Gestänge zum Bewegen der Hebel in Richtung der Längsachse der Trommel aufweist. Das Gestänge dient dabei der Verbindung des bzw. der Zylinder der Betätigungseinrichtung mit den Hebeln der Hebeleinrichtung und dadurch einer Kraftübertragung während des Umschlags.

Ferner ist von Vorteil, wenn das Gestänge zumindest eine Führungsstange mit zumindest einem Anschlag zur Begrenzung der Bewegung der Hebel umfasst, wobei eine Position des Anschlags in Richtung der Längsachse der Trommel einstellbar sein kann. Neben einer bloßen Begrenzung der Bewegung der Hebel ist es dabei möglich, die Bewegung der Hebel an die Länge der Mittensegmente eines Mittensegmentsatzes anzupassen. Wird beispielsweise ein Mittensegmentsatz mit einer vergleichsweise geringen Länge gewählt, kann der Anschlag zur Begrenzung der Bewegung der Hebel entlang der Richtung der Längsachse der Trommel eingestellt werden, sodass die Hebel eine an die Länge der Mittensegmente angepasste Bewegung und damit einen an die Länge der Mittensegmente angepassten Umschlag des Seitenwandstreifens der Reifenkarkasse durchführen.

Hierbei ist von Vorteil, wenn die Führungsstange zur Einstellung der Position des Anschlags eine Zahnstange ist. Eine derartige Zahnstange kann eine Rasterung aufweisen, wodurch die Fixierung des Anschlags einfach eingestellt werden kann. So kann beispielsweise nach einem Wechsel eines Mittensegmentsatzes mit einem weiteren Mittensegmentsatz besonders einfach eine Position des Anschlags an die Länge des neuen Mittensegmentsatzes angepasst werden, wenn die Mittensegmentsätze eine unterschiedliche Länge aufweisen. Analog zur Anpassung an die Länge eines Mittensegmentsatzes kann auch eine Anpassung an eine gewünschte Umschlagsbewegung erfolgen.

Ferner ist von Vorteil, wenn das Gestänge zumindest ein Gelenk und/oder ein Glied, bevorzugt zwei Gelenke sowie ein zwischen den Gelenken angeordnetes Glied, zur Verschwenkung und/oder Beabstandung des Hebels von der Längsachse aufweist. Die Beabstandung der Hebel kann dabei parallel zur Längsachse erfolgen. Ein derartiges Gestänge kann dazu dienen, die Verschwenkung bzw. Beabstandung der Hebel von der Längsachse und eine Kraftübertragung von den Zylindern auf die Hebel durchzuführen.

Weiter ist vorteilhaft, wenn die Umschlagvorrichtung eine Halteeinrichtung mit zumindest einer Feder umfasst, wobei die Feder derart an einem Hebel angeordnet ist, dass durch die Feder die Verschwenkung und/oder Beabstandung des Hebels von der Längsachse begrenzbar ist. Dies bewirkt, dass die Hebel während des Umschlags und auch nach Vollendung des Umschlags in einer definierten Entfernung von der Längsachse fixiert werden können. Dies ist insbesondere dann vorteilhaft, wenn während des Umschlags die Bewegungsänderung vom Aufgleiten auf den Seitenelementen zum Übergleiten der Klemmelemente und somit von einer schrägen Aufwärtsbewegung zu einer parallelen Längsbewegung entlang der Längsachse geändert wird. Die Hebel gleiten so im Wesentlichen eng anliegend an den Mittensegmenten auf diese auf, wodurch auch der Seitenwandstreifen der Reifenkarkasse auf einer Mittellage der Reifenkarkasse aufliegt.

Es ist besonders vorteilhaft, wenn die Trommel eine weitere Umschlagvorrichtung aufweist, wobei die weitere Umschlagvorrichtung eine weitere Hebeleinrichtung mit einer Mehrzahl weiterer Hebel umfassen kann, derart, dass durch die weiteren Hebel der weiteren Hebeleinrichtung ein weiterer Seitenwandstreifen der Reifenkarkasse umschlagbar ist. Hierbei kann nacheinander ein Umschlag von beispielsweise zwei Seitenwandstreifen über die Länge der Mittensegmente erfolgen, wobei es bei dem jeweiligen Umschlag über die gesamte Länge der Mittensegmente zu einem Umschlag von Wulstkern zu Wulstkern kommt. Dabei kann der zweite umgeschlagene Seitenwandstreifen auf dem ersten umgeschlagenen Seitenwandstreifen aufliegen. Wenn letzterer wiederum auf einem Mittelteil der Reifenkarkasse aufliegt, kann dies zu einer besonders stabilen Einbettung der Wulstkerne in die Reifenkarkasse führen, welche die Herstellung eines stabilen Reifenrohlings zu einem frühen Stadium im Herstellungsprozess ermöglicht. Es kann vorgesehen sein, dass die Umschlagvorrichtung jeweils gegenüberliegend an den Mittensegmenten angeordnet sind, sodass ein rechtsseitiger und im Anschluss ein linksseitiger bzw. ein linksseitiger und im Anschluss ein rechtsseitiger Umschlag erfolgen kann. Die Umschlagvorrichtung bzw. die Hebel können dabei durch den Betrieb aufeinanderfolgend wirkender Zylinder bewegt werden.

Die Trommel kann vorteilhaft eine Welle sowie einen an einem Ende der Welle angeordneten Flansch aufweisen, wobei die Trommel über den Flansch an einer Reifenbaumaschine befestigbar sein kann. Hierbei wird die Trommel als eine Baugruppe Bestandteil einer Reifenbaumaschine, wodurch der Prozess der Herstellung eines Reifens flexibel gestaltet werden kann.

Die Trommel kann eine Einrichtung zur Verteilung von Druckluft sowie zumindest eine in der Welle angeordnete Leitung umfassen, derart, dass mittels der durch die Einrichtung bereitgestellte Druckluft Zylinder der Umschlagvorrichtung und/oder der Klemmvorrichtung betreibbar sein können. Hierbei kann vorgesehen sein, dass die einzelnen Zylinder der Umschlagvorrichtung bzw. Klemmvorrichtung über Druckluftleitungen angesteuert werden. Durch die Einrichtung zur Verteilung von Druckluft können die einzelnen Bewegungsabläufe bei der Herstellung eines Fahrzeugreifens mittels der erfindungsgemäßen Trommel konzertiert werden. Dabei ist es möglich, die Zylinder der Klemmvorrichtung und die Zylinder der Umschlagvorrichtung getrennt voneinander zu betreiben und beispielsweise zunächst die Mittensegmente zu expandieren, dann eine Umschlagbewegung und im Anschluss ein Kollabieren der Mittensegmente durchzuführen.

Die Erfindung kann auch eine Reifenbaumaschine mit einer drehbaren Welle umfassen, an der die erfindungsgemäße Trommel montiert ist. Weitere vorteilhafte Ausführungsformen einer Reifenbaumaschine ergeben sich aus den Merkmalsbeschreibungen der auf den Anspruch 1 rückbezogenen Unteransprüche.

Bei dem erfindungsgemäßen Verfahren zur Herstellung von Fahrzeugreifen, insbesondere Reifen für Fahrräder, Motorräder, Roller oder dergleichen, wird eine Reifenkarkasse auf einer erfindungsgemäßen Trommel angeordnet, wobei die Trommel eine Klemmvorrichtung mit Mittensegmenten aufweist mittels derer die Reifenkarkasse gehaltert wird, wobei die Trommel eine Umschlagvorrichtung mit einer Hebeleinrichtung aufweist durch die ein Seitenwandstreifen der Reifenkarkasse über zumindest einen Wulstkern umgeschlagen wird, wobei der Umschlag durch Hebel der Hebeleinrichtung erfolgt, wobei die Mittensegmente die Reifenkarkasse über eine axiale Länge A der Mittensegmente in Richtung einer Längsachse der Trommel haltern, wobei die Hebel eine Länge A' aufweisen, wobei die Länge A' der Hebel größer oder gleich der Länge der Mittensegmente ist, wobei die Hebel für den Umschlag über die Mittensegmente bewegt werden, wobei die Hebel die Mittensegmente vollständig überlagern, wobei die Hebel die Seitenwandstreifen der Reifenkarkasse über die gesamte Länge A der Mittensegmente umschlagen.

Erfindungsgemäß überlagern die Hebel die Mittensegmente vollständig, wobei die Hebel die Seitenwandstreifen der Reifenkarkasse über die gesamte Länge A der Mittensegmente umschlagen. Bei einem derartigen Umschlag der Seitenwandstreifen der Reifenkarkasse kann ein vollständiger Umschlag von Wulstkern zu Wulstkern erfolgen, wobei unter Verwendung einer weiteren Umschlagvorrichtung dieser Umschlag mit beiden Seitenwandstreifen der Reifenkarkasse durchgeführt werden kann.

Das Verfahren kann dabei folgende Schritte umfassen:
a) Anordnung der Reifenkarkasse sowie des Wulstkerns auf der Trommel;
b) Klemmen von Reifenkarkasse und Wulstkern durch radiale Expansion von Mittensegmenten und/oder Seitensegmenten der Klemmvorrichtung der Trommel;
c) Umschlag eines Seitenwandstreifens der Reifenkarkasse über den Wulstkern mittels der Umschlagvorrichtung der Trommel;
d) Kollabieren der Mittensegmente und/oder der Seitensegmente der Klemmvorrichtung;
e) Entfernen eines Rohlings des Fahrzeugreifens von der Trommel.

Es kann vorgesehen sein, dass nach einem Umschlag des Seitenwandstreifens der Reifenkarkasse ein Auftrag von zumindest einer weiteren Lage eines Materials des Fahrzeugreifens erfolgt, wobei das Kollabieren der Mittensegmente und/oder der Seitensegmente der Klemmvorrichtung nach diesem Auftrag erfolgen kann. Hierbei ist es möglich, eine beliebige Anzahl weiterer Lagen auf die umgeschlagene Reifenkarkasse aufzutragen und dadurch eine entsprechend an die Anforderungen des zu fertigenden Reifens angepasste Materialdicke zu schaffen. Es ist möglich, durch dieses Verfahren eine Vielzahl der gleichen Reifen nacheinander zu fertigen oder aber beispielsweise nach einem Herstellungsprozess einen Mittensegmentsatz zu wechseln und einen weiteren Fahrzeugreifen auf derselben Trommel zu fertigen.

Weitere vorteilhafte Ausführungsformen des Verfahrens ergeben sich aus den Merkmalsbeschreibungen der auf den Anspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: Eine isometrische Darstellung einer ersten Ausführungsform einer Trommel;
- **Fig. 2a**: eine Vorderansicht der ersten Ausführungsform einer Trommel in einer ersten Arbeitsposition;
- **Fig. 3a**: eine Schnittansicht entlang einer Linie IIIa-IIIa aus Fig. 2a;

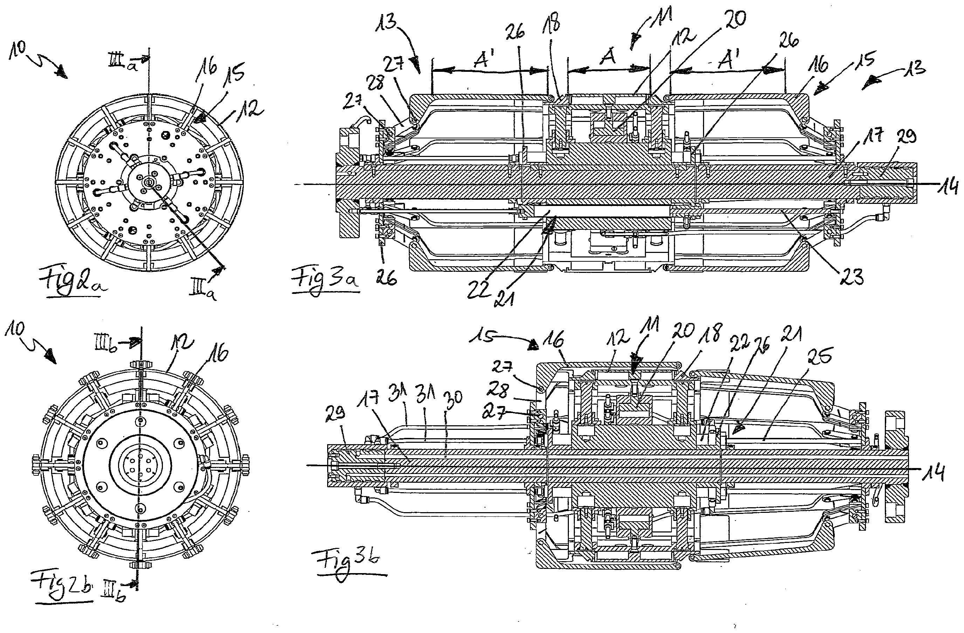

- **Fig. 2b**: eine Vorderansicht der ersten Ausführungsform der Trommel in einer zweiten Arbeitsposition;
- **Fig. 3b**: eine Schnittansicht entlang einer Linie IIIb-IIIb aus Fig. 2b;

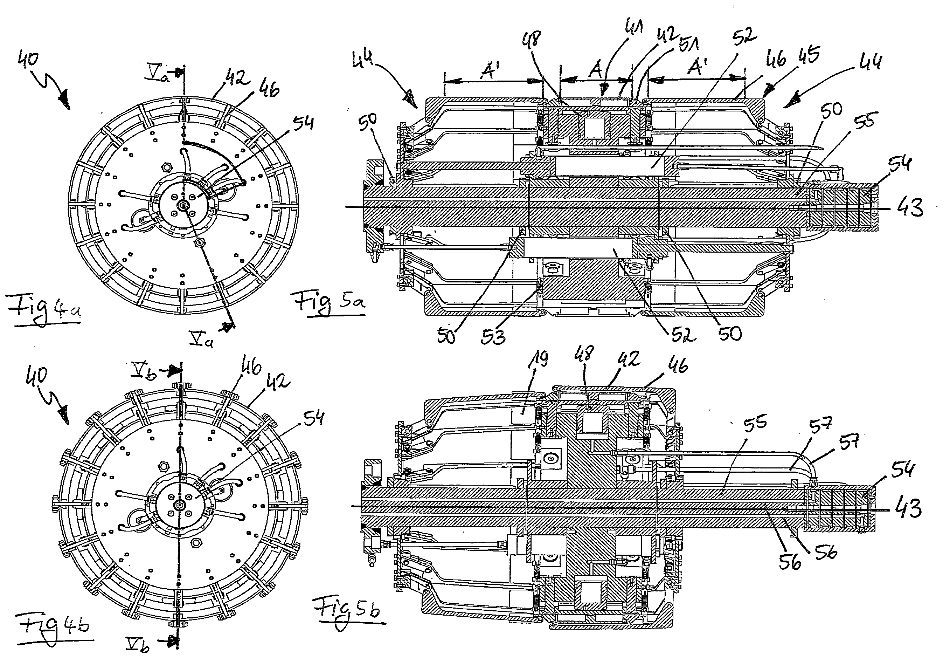

- **Fig. 4a**: eine Rückansicht einer zweite Ausführungsform einer Trommel in einer ersten Arbeitsposition;
- **Fig. 5a**: eine Schnittansicht entlang einer Linie Va-Va aus Fig. 4a;
- **Fig. 4b**: eine Rückansicht der zweiten Ausführungsform einer Trommel in einer zweiten Arbeitsposition;
- **Fig. 5b**: eine Schnittansicht entlang einer Linie Vb-Vb aus Fig. 4b.

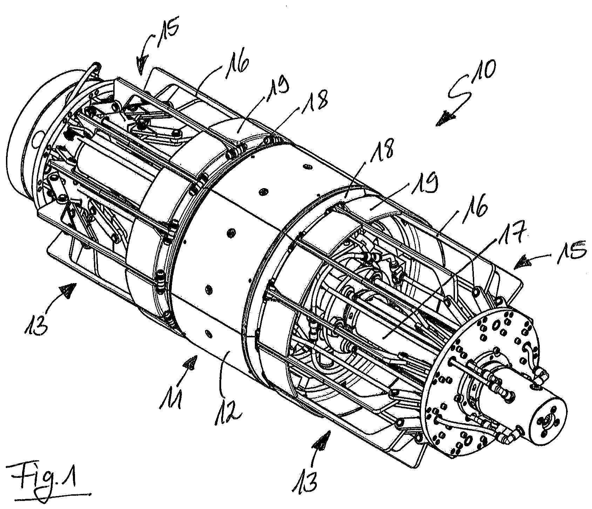

**Fig. 1** zeigt eine Trommel 10 zur Herstellung von Fahrzeugreifen, insbesondere Reifen für Fahrräder, Motorräder, Roller oder dergleichen. Die Trommel 10 umfasst dabei eine Klemmvorrichtung 11 mit Mittensegmenten 12 zum Haltern einer nicht dargestellten Reifenkarkasse und zwei Umschlagvorrichtungen 13, wobei jeweils eine Umschlagvorrichtung 13 an einer Seite der Klemmvorrichtung 11 entlang einer Längsachse 14 der Trommel 10 angeordnet ist. Durch die Umschlageinrichtung 13 wird ein Umschlag eines Seitenwandstreifens der Reifenkarkasse über einen nicht dargestellten Wulstkern realisiert. Die Umschlagvorrichtung 13 umfasst weiterhin eine Hebeleinrichtung 15, wobei die Hebeleinrichtung 15 eine Mehrzahl Hebel 16 aufweist, mittels derer der Seitenwandstreifen der Reifenkarkasse umgeschlagen werden kann. Sowohl die Klemmvorrichtung 11 als auch die Umschlagvorrichtung 13 sind an einer Welle 17 angeordnet. Die Klemmvorrichtung 11 weist zudem Seitensegmente 18 auf, welche an axialen Rändern der Mittensegmente 12 der Klemmvorrichtung 11 angeordnet sind. Zudem weist die Hebeleinrichtung 15 der Umschlagvorrichtung 13 eine Mehrzahl Führungselemente 19 auf, wobei die Führungselemente 19 zwischen den Hebeln 16 der Hebeleinrichtung 15 angeordnet sind.

**Fig. 2a** und **3a** zeigen eine Zusammenschau von Ansichten der Trommel 10, wobei in **Fig. 2a** eine Vorderansicht der Trommel 10 gezeigt ist und in **Fig. 3a** eine Schnittansicht der Trommel 10 gezeigt ist. Insbesondere aus **Fig. 3a** geht hervor, dass die Mittensegmente 12 der Klemmvorrichtung 11 eine Länge A aufweisen. Die Hebel 16 der Hebeleinrichtung 15 der Umschlagvorrichtung 13 weisen eine Länge A' auf, wobei die Länge A' der Hebel 16 die Länge A der Mittensegmente 12 übersteigt. Somit können die Hebel 16, wenn sie auf die Mittensegmente 12 aufgleiten, diese vollständig überdecken.

Die Klemmvorrichtung 11 der Trommel 10 umfasst weiterhin einen Zylinder 20, mit dem die Mittensegmente 12 radial expandiert werden können, das heißt von der Längsachse 14 der Trommel 10 wegbewegt werden können. In **Fig. 2a** und **3a** ist dabei die nicht expandierte Klemmvorrichtung 11 gezeigt. Grundsätzlich ist für die radiale Expansion der Klemmvorrichtung 11 vorgesehen, dass sowohl die Mittensegmente 12 als auch die Seitensegmente 18 mittels des Zylinders 20 von der Längsachse 14 der Trommel 10 wegbewegt werden. Der Zylinder 20 kann dabei ein Kurzhubzylinder sein. Durch die Expansion der Mittensegmente 12 bzw. Seitensegmente 18 kann eine nicht dargestellte Reifenkarkasse sowie auf der Seitenkarkasse hier ebenfalls nicht dargestellte Wulstkerne geklemmt werden. Die Wulstkerne liegen dann an den Seitensegmente 18 an bzw. sind in eine hier nicht sichtbare Nut in den Seitensegmenten 18 eingesetzt.

Jede Umschlagvorrichtung 13 der Trommel 10 umfasst eine Betätigungseinrichtung 21 die wenigstens einen Zylinder 22 aufweist, durch den die Hebel 16 der Hebeleinrichtung 15 in Richtung der Längsachse 14 der Trommel 10 bewegt werden können. Die Zylinder 22 sind parallel zur Längsachse 14 der Trommel 10 angeordnet. Eine Bewegung eines Kolbens 23 des Zylinders 22 bewirkt dabei eine Zugkraft auf die Hebeleinrichtung 15 und führt so zu einer Verschiebung der Hebel 16 in Richtung der Längsachse 14 der Trommel 10. Hierfür weist die Betätigungseinrichtung 21 ein Gestänge 24 auf, welches die Hebel 16 mit dem Zylinder 20 verbindet. Wesentlich ist dabei, dass das Gestänge 24 eine Führungsstange 25 mit jeweils einem Anschlag 26 an den Enden der Führungsstange 25 zur Begrenzung der Bewegung der Hebel 16 aufweist. Jeder Anschlag 26 kann dabei in Richtung der Längsachse 14 der Trommel 10 in seiner Position eingestellt werden. Dies ist von Vorteil, wenn der Satz Mittensegmente 12 mit einer Länge A₁ durch einen Satz Mittensegmente mit einer Länge A₂ ausgetauscht wird, wobei die Länge A₁ nicht gleich der Länge A₂ ist, und die Anschläge 26 an die neue Länge der Mittensegmente angepasst werden müssen, damit ein Umschlag der Reifenkarkasse über die neue Länge der Mittensegmente hinweg erfolgen kann. Weiterhin umfasst das Gestänge 24 der Betätigungseinrichtung 21 zwei Gelenke 27 sowie ein zwischen den Gelenken 27 angeordnetes Glied 28, mittels derer jeweils der Hebel 16 relativ zur Längsachse 14 der Trommel 10 verschwenkt bzw. von der Längsachse 14 beabstandet werden kann.

Die Zusammenschau der **Fig. 2b** und **3b** zeigt die Trommel 10 in einer zweiten Arbeitsposition, wobei die Umschlagvorrichtung 13 eine Bewegung der Hebel 16 über die gesamte Länge A der Mittensegmente 12 durchgeführt hat. Hierbei ist hervorzuheben, dass bei einem Umschlag des hier nicht dargestellten Seitenwandstreifens der Reifenkarkasse die Klemmvorrichtung 11 in einem radial expandierten Zustand ist, derart, dass die Mittensegmente 12 durch den Zylinder 20 von der Längsachse 14 der Trommel 10 beabstandet wurden, sodass eine nicht dargestellte Reifenkarkasse zusammen mit nicht dargestellten Wulstkernen auf der Trommel 10 bereits verspannt wurde. Der Umschlag des ebenfalls nicht dargestellten Seitenwandstreifens der Reifenkarkasse mittels der Hebel 16 der Umschlagvorrichtung 13 wurde durch Betätigung der Zylinder 22 realisiert. Damit einhergehend wurde das Gestänge 24 der Betätigungseinrichtung 21 der Umschlagvorrichtung 13 in Richtung der Längsachse 14 der Trommel 10 verschoben. Dabei wurden die Hebel 16 von der Längsachse 14 durch das Gestänge 24, insbesondere die Gelenke 27 und das zwischen den Gelenken 27 angeordnete Glied 28, beabstandet und die durch die radiale Expansion der Mittensegmente 12 der Klemmvorrichtung 11 erzeugte Beabstandung der Mittensegmente 12 von der Längsachse 14 ausgeglichen. Es ist dabei vorgesehen, dass die Hebel 16 zunächst auf die Seitensegmente 18 aufgleiten und dann entlang der Mittensegmente 12 in Richtung der Längsachse 14 bewegt werden. Zum Betrieb der Zylinder 22 der Umschlagvorrichtung 13 bzw. der Zylinder 20 der Klemmvorrichtung 11 weist die Trommel 10 eine Einrichtung 29 zur Verteilung von Druckluft sowie in der Welle 17 der Trommel 10 ausgebildete Leitungen 30 auf. Ausgehend von der Einrichtung 29 können die Zylinder 20, 22 jeweils separat durch weitere Leitungen 31 mit Druckluft versorgt werden. Hierbei ist eine Einzelansteuerung der jeweiligen Zylinder 20, 22 vorgesehen.

Eine Zusammenschau der **Fig. 4a** bis **5b** zeigt eine zweite Ausführungsform einer Trommel 40. Die Trommel 40 weist wiederum eine Klemmvorrichtung 41 mit Mittensegmenten 42 auf, wobei die Mittensegmente 42 eine Länge A analog zur ersten Ausführungsform der Trommel aufweisen. An beiden Seiten der Klemmvorrichtung 41 entlang einer Längsachse 43 der Trommel 40 sind Umschlagvorrichtungen 44 angeordnet. Jede Umschlagvorrichtung 44 umfasst dabei eine Hebeleinrichtung 45 mit einer Mehrzahl Hebel 46 sowie eine Betätigungseinrichtung 47 mit zumindest einem Zylinder 48 und einem Gestänge 49, welches den Zylinder 48 mit den Hebeln 46 verbindet. Die Bewegung der Hebel 46 ist wiederum durch Anschläge 50 der Betätigungseinrichtung 47 begrenzbar. Die Anschläge 50 sind auch hier entlang der Längsachse 43 der Trommel 40 einstellbar. Die Trommel 40 weist eine Klemmvorrichtung 41 auf, bei welcher die Mittensegmente 42 sowie Seitensegmente 51 durch einen Zylinder 52 radial expandierbar und im Gegensatz zur ersten Ausführungsform der Trommel durch eine Feder 53 rückholbar sind. Zur Betätigung der Zylinder 48 der Umschlagvorrichtung 44 sowie der Zylinder 52 der Klemmvorrichtung 41 weist die Trommel 40 eine Einrichtung 54 sowie in einer Welle 55 ausgebildete Leitung 56 zur Versorgung mit Druckluft auf. Über die Einrichtung 54 können die Zylinder 48 und 52 über Leitungen 57 separat mit Druckluft versorgt werden.

Die Zusammenschau der **Fig. 4b** und **5b** zeigt die zweite Ausführungsform der Trommel 40 in einer zweiten Arbeitsposition, wobei eine Umschlageinrichtung 44 eine Bewegung der Hebel 46 über die Mittensegmente 42 der Klemmvorrichtung 41 der Trommel 40 ausführt. Analog zur ersten Ausführungsform der Trommel werden die Hebel 46, welche eine Länge A' aufweisen, über die Mittensegmente 42, welche eine Länge A aufweisen, bewegt, wobei wiederum die Länge A' größer als die Länge A ist. Die Mittensegmente 42 der Klemmvorrichtung 41 sind dabei expandiert, das heißt die Mittensegmente 42 wurden durch den Zylinder 52 von der Längsachse 43 der Trommel 40 beabstandet. Durch diese radiale Expansion der Mittensegmente 42 und der Seitensegmente 51 kann wiederum die nicht dargestellte Reifenkarkasse mit nicht dem dargestellten Wulstkernen gespannt werden. Der Umschlag der Seitenwandstreifen der Reifenkarkasse erfolgt analog zur ersten Ausführungsform der Trommel.

## Patentansprüche

1. Trommel (10, 40) zur Herstellung von Fahrzeugreifen, insbesondere Reifen für Fahrräder, Motorräder, Roller oder dergleichen, wobei die Trommel eine Klemmvorrichtung (11, 41) mit Mittensegmenten (12, 42) zum Halten einer Reifenkarkasse und zumindest eine Umschlagvorrichtung (13, 44) zum Umschlagen eines Seitenwandstreifens der Reifenkarkasse über einen Wulstkern des Reifens umfasst, wobei die Umschlagvorrichtung eine Hebeleinrichtung (15, 45) umfasst, wobei die Hebeleinrichtung eine Mehrzahl Hebel (16, 46) aufweist, mittels derer der Seitenwandstreifen umschlagbar ist, wobei die Mittensegmente (12, 42) in Richtung einer Längsachse (14, 43) der Trommel eine axiale Länge A aufweisen, wobei die Hebel (16, 46) eine Länge A' aufweisen, wobei die Länge A' der Hebel größer oder gleich der Länge A der Mittensegmente ist,
**dadurch gekennzeichnet,**
**dass** der Seitenwandstreifen mittels der Hebel über die gesamte Länge A der Mittensegmente umschlagbar ist, wobei die Hebeleinrichtung eine Mehrzahl Führungselemente (19) aufweist, wobei die Führungselemente zwischen den Hebeln der Hebeleinrichtung angeordnet sind.

2. Trommel nach Anspruch 1,
**dadurch gekennzeichnet,**
**dass** die Trommel (10, 40) ersten Satz Mittensegmente (12, 42) sowie einen zweiten Satz Mittensegmente (12, 42) umfasst, wobei der erste Satz Mittensegmente eine Länge A₁ und der zweite Satz Mittensegmente eine Länge A₂ aufweist, wobei A₁ ungleich A₂ ist.

3. Trommel nach Anspruch 1 oder 2,
**dadurch gekennzeichnet,**
**dass** die Länge A der Mittensegmente (12, 42) 20 bis 400 mm, vorzugsweise 40 bis 300 mm, besonders bevorzugt 48 bis 200 mm, ist.

4. Trommel nach einem der vorangegangenen Ansprüche,
**dadurch gekennzeichnet,**
**dass** die Mittensegmente (12, 42) eine rechteckige Grundfläche aufweisen, wobei die Mittensegmente derart gebogen sind, dass sie einen Teil eines Außenmantels eines Zylinders ausbilden.

5. Trommel nach einem der vorangegangenen Ansprüche,
**dadurch gekennzeichnet,**
**dass** die Klemmvorrichtung (11, 41) zumindest einen Zylinder (20), vorzugweise zwei oder mehr Zylinder, zur radialen Expansion der Mittensegmente (12, 42) aufweist.

6. Trommel nach Anspruch 5,
**dadurch gekennzeichnet,**
**dass** die expandierten Mittensegmente (12, 42) der Klemmvorrichtung (11, 41) durch den Zylinder (20) und/oder zumindest eine Feder (53) rückholbar sind.

7. Trommel nach einem der vorangegangenen Ansprüche,
**dadurch gekennzeichnet,**
**dass** die Klemmvorrichtung (11, 41) Seitensegmente (18, 51) aufweist, die an axialen Rändern der Mittensegmente (12, 42) angeordnet sind, wobei eine Position der Seitensegmente in Richtung der Längsachse (14, 43) einstellbar ist.

8. Trommel nach Anspruch 7,
**dadurch gekennzeichnet,**
**dass** die Seitensegmente (18, 51) zusammen mit den Mittensegmenten (12, 42) radial expandierbar und/oder rückholbar sind.

9. Trommel nach einem der vorangegangenen Ansprüche,
**dadurch gekennzeichnet,**
**dass** die Umschlagvorrichtung (13, 44) eine Betätigungseinrichtung (21, 47) mit zumindest einen Zylinder (22, 52), bevorzugt zwei Zylindern, besonders bevorzugt vier Zylindern, aufweist, wobei durch den Zylinder die Hebel (16, 46) der Hebeleinrichtung (15, 45) in Richtung der Längsachse (14, 43) der Trommel (10, 40) bewegbar sind.

10. Trommel nach Anspruch 9,
**dadurch gekennzeichnet,**
**dass** die Betätigungseinrichtung (21, 47) ein Gestänge (24, 49) zur Bewegung der Hebel (16, 46) in Richtung der Längsachse (14, 43) der Trommel (10, 40) aufweist.

11. Trommel nach Anspruch 10,
**dadurch gekennzeichnet,**
**dass** das Gestänge (24, 49) zumindest eine Führungsstange (25) mit zumindest einem Anschlag (26, 50) zur Begrenzung der Bewegung der Hebel (16, 46) umfasst, wobei eine Position des Anschlags in Richtung der Längsachse (14, 43) der Trommel (10, 40) einstellbar ist.

12. Trommel nach Anspruch 11,
**dadurch gekennzeichnet,**
**dass** die Führungsstange (25) zur Einstellung der Position des Anschlags (26, 50) eine Zahnstange ist.

13. Trommel nach Anspruch 10 oder 11,
**dadurch gekennzeichnet,**
**dass** das Gestänge (24, 49) zumindest ein Gelenk (27) und/oder ein Glied (28), bevorzugt zwei Gelenke sowie ein zwischen den Gelenken angeordnetes Glied, zur Verschwenkung und/oder Beabstandung des Hebels (16, 46) von der Längsachse (14, 43) aufweist.

14. Trommel nach einem der vorangegangenen Ansprüche,
**dadurch gekennzeichnet,**
**dass** die Umschlagvorrichtung (13, 44) eine Halteeinrichtung mit zumindest einer Feder umfasst, wobei die Feder derart an einem Hebel (16, 46) angeordnet ist, dass durch die Feder die Verschwenkung und/oder Beabstandung des Hebels von der Längsachse (14, 43) begrenzbar ist.

15. Trommel nach einem der vorangegangenen Ansprüche,
**dadurch gekennzeichnet,**
**dass** die Trommel eine weitere Umschlagvorrichtung (13, 44) aufweist, wobei die weitere Umschlagvorrichtung eine weitere Hebeleinrichtung (15, 45) mit einer Mehrzahl weiterer Hebel (16, 46) umfasst, derart, dass durch die weiteren Hebel der weiteren Hebeleinrichtung ein weiterer Seitenwandstreifen der Reifenkarkasse umschlagbar ist.

16. Trommel nach einem der vorangegangenen Ansprüche,
**dadurch gekennzeichnet,**
**dass** die Trommel (10, 40) eine Welle (17, 55) sowie einen an einem Ende der Welle angeordneten Flansch aufweist, wobei die Trommel über den Flansch an einer Reifenbaumaschine befestigbar ist.

17. Trommel nach einem der vorangegangenen Ansprüche,
**dadurch gekennzeichnet,**
**dass** die Trommel (10, 40) eine Einrichtung (29, 54) zur Verteilung von Druckluft sowie zumindest eine in der Welle (17, 55) angeordnete Leitung (30, 56) umfasst, derart, dass mittels der durch die Einrichtung bereitgestellte Druckluft Zylinder (20, 22, 48, 52) der Umschlagvorrichtung (13, 44) und/oder der Klemmvorrichtung (11, 41) betreibbar sind.

18. Verfahren zur Herstellung von Fahrzeugreifen, insbesondere Reifen für Fahrräder, Motorräder, Roller oder dergleichen, wobei eine Reifenkarkasse auf einer Trommel (10, 40) nach einem der vorangegangenen Ansprüche angeordnet wird, wobei die Trommel eine Klemmvorrichtung (11, 41) mit Mittensegmenten (12, 42) aufweist, mittels derer die Reifenkarkasse gehaltert wird, wobei die Trommel eine Umschlagvorrichtung (13, 44) mit einer Hebeleinrichtung (15, 45) aufweist, durch die ein Seitenwandstreifen der Reifenkarkasse über zumindest einen Wulstkern umgeschlagen wird, wobei der Umschlag durch Hebel (16, 46) der Hebeleinrichtung erfolgt, wobei die Mittensegmente (12, 42) die Reifenkarkasse über eine axiale Länge A der Mittensegmente in Richtung einer Längsachse (14, 43) der Trommel (10, 40) haltern, wobei die Hebel (16, 46) eine Länge A' aufweisen, wobei die Länge A' der Hebel größer oder gleich der Länge der Mittensegmente ist,
**dadurch gekennzeichnet,**
**dass** die Hebel für den Umschlag über die Mittensegmente bewegt werden, wobei die Hebel die Mittensegmente vollständig überlagern, wobei die Hebel die Seitenwandstreifen der Reifenkarkasse über die gesamte Länge A der Mittensegmente umschlagen.

19. Verfahren nach Anspruch 18,
**dadurch gekennzeichnet,**
**dass** das Verfahren folgende Schritte umfasst:
a) Anordnung der Reifenkarkasse sowie des Wulstkerns auf der Trommel (10, 40);
b) Klemmen von Reifenkarkasse und Wulstkern durch radiale Expansion von Mittensegmenten (12, 42) und/oder Seitensegmenten (18, 51) der Klemmvorrichtung (11, 41) der Trommel;
c) Umschlag eines Seitenwandstreifens der Reifenkarkasse über den Wulstkern mittels der Umschlagvorrichtung (13, 44) der Trommel;
d) Kollabieren der Mittensegmente und/oder der Seitensegmente der Klemmvorrichtung;
e) Entfernen eines Rohlings des Fahrzeugreifens von der Trommel.

20. Verfahren nach Anspruch 18 oder 19,
**dadurch gekennzeichnet,**
**dass** nach einem Umschlag des Seitenwandstreifens der Reifenkarkasse ein Auftrag von zumindest einer weiteren Lage eines Materials des Fahrzeugreifens erfolgt, wobei das Kollabieren der Mittensegmente (12, 42) der Klemmvorrichtung (11, 41) nach dem Auftrag erfolgt.

## Claims

1. A drum (10, 40) for producing vehicle tires, in particular tires for bicycles, motorcycles, scooters or the like, the drum comprising a clamping device (11, 41) having center segments (12, 42) for holding a tire carcass and at least one turning-up device (13, 44) for turning up a sidewall strip of the tire carcass over a bead core of the tire, the turning-up device comprising a lever mechanism (15, 45), the lever mechanism having a plurality of levers (16, 46) by means of which the sidewall strip is configured to be turned up, the center segments (12, 42) having an axial length A towards a longitudinal axis (14, 43) of the drum, the levers (16, 46) having a length A', the length A' of the levers being greater than or equal to the length A of the center segments
**characterized in that**
the sidewall strip is configured to be turned up over the total length A of the center segments by means of the lever, the lever mechanism having a plurality of guide elements (19), the guide elements being disposed between the levers of the lever mechanism.

2. The drum according to claim 1,
**characterized in that**
the drum (10, 40) comprises a first set of center segments (12, 42) and a second set of center segments (12, 42), the first set of center segments having a length A₁ and the second set of center segments having a length A₂, A₁ being unequal to A₂.

3. The drum according to claim 1 or 2,
**characterized in that**
the length A of the center segments (12, 42) is 20 mm to 400 mm, preferably 40 mm to 300 mm, more preferably 48 mm to 200 mm.

4. The drum according to any one of the preceding claims, **characterized in that**
the center segments (12, 42) have a rectangular base, the center segments being bent in such a manner that they form a part of an outer sheath of a cylinder.

5. The drum according to any one of the preceding claims, **characterized in that**
the clamping device (11, 41) has at least one cylinder (20), preferably two or more cylinders, for radially expanding the center segments (12, 42).

6. The drum according to claim 5,
**characterized in that**
the expanded center segments (12, 42) of the clamping device (11, 41) are retrievable by the cylinder (20) and/or at least one spring (53).

7. The drum according to any one of the preceding claims, **characterized in that**
the clamping device (11, 41) has side segments (18, 51) which are disposed on axial edges of the center segments (12, 42), a position of the side segments being adjustable towards the longitudinal axis (14, 43).

8. The drum according to claim 7,
**characterized in that**
the side segments (18, 51) are radially expandable and/or retrievable along with the center segments (12, 42).

9. The drum according to any one of the preceding claims, **characterized in that**
the turning-up device (13, 44) has an actuation unit (21, 47) having at least one cylinder (22, 52), preferably two cylinders, more preferably four cylinders, the levers (16, 46) of the lever mechanism (15, 45) being movable towards the longitudinal axis (14, 43) of the drum (10, 40) by means of the cylinder.

10. The drum according to claim 9,
**characterized in that**
the actuation unit (21, 47) has a linkage (24, 49) for moving the levers (16, 46) towards the longitudinal axis (14, 43) of the drum (10, 40).

11. The drum according to claim 10,
**characterized in that**
the linkage (24, 49) comprises at least one guide rod (25) having at least one stop (26, 50) for limiting the movement of the levers (16, 46), a position of the stop being adjustable towards the longitudinal axis (14, 43) of the drum (10, 40).

12. The drum according to claim 11,
**characterized in that**
the guide rod (25) for adjusting the position of the stop (26, 50) is a toothed rack.

13. The drum according to claim 10 or 11,
**characterized in that**
the linkage (24, 49) has at least one joint (27) and/or one link (28), preferably two joints and one link disposed between the joints, for pivoting and/or spacing apart the lever (16, 46) from the longitudinal axis (14, 43).

14. The drum according to any one of the preceding claims, **characterized in that**
the turning-up device (13, 44) comprises a holding element having at least one spring, the spring being disposed on a lever (16, 46) in such a manner that the pivoting and/or spacing apart of the lever from the longitudinal axis (14, 43) is limitable by means of the spring.

15. The drum according to any one of the preceding claims, **characterized in that**
the drum has an additional turning-up device (13, 44), the additional turning-up device comprising an additional lever mechanism (15, 45) having a plurality of additional levers (16, 46) in such a manner that an additional sidewall strip of the tire carcass is configured to be turned up by means of the additional levers of the additional lever mechanism.

16. The drum according to any one of the preceding claims, **characterized in that**
the drum (10, 40) has a shaft (17, 55) and a flange which is disposed on an end of the shaft, the drum being attachable to a tire building machine via the flange.

17. The drum according to any one of the preceding claims, **characterized in that**
the drum (10, 40) comprises a device (29, 54) for distributing compressed air and at least one line (30, 56), which is disposed in the shaft (17, 55), in such a manner that cylinders (20, 22, 48, 52) of the turning-up device (13, 44) and/or the clamping device (11, 41) are operable by means of the compressed air provided by the device.

18. A method for producing vehicle tires, in particular tires for bicycles, motorcycles, scooters or the like, a tire carcass being disposed on a drum (10, 40) according to any one of the preceding claims, the drum having a clamping device (11, 41) having center segments (12, 42) by means of which the carcass is held, the drum having a turning-up device (13, 44) having a lever mechanism (15, 45) by means of which a sidewall strip of the tire carcass is turned up over at least one bead core, the turn-up being carried out by means of levers (16, 46) of the lever mechanism, the center segments (12, 42) holding the tire carcass along an axial length A of the center segments towards a longitudinal axis (14, 43) of the drum (10, 40), the levers (16, 46) having a length A', the length A' of the levers being greater than or equal to the length of the center segments,
**characterized in that**
the levers are moved over the center segments for the turn-up, the levers (16, 46) fully superimposing the center segments (12, 42), the levers turning up the sidewall strip of the tire carcass over the total length A of the center segments.

19. The method according to claim 18,
**characterized in that**
the method comprises the following steps:
a) disposing the tire carcass and the bead core on the drum (10, 40);
b) clamping the tire carcass and the bead core by means of radial expansion of the center segments (12, 42) and/or the side segments (18, 51) of the clamping device (11, 41) of the drum;
c) turning up a sidewall strip of the tire carcass over the bead core by means of the turning-up device (13, 44) of the drum;
d) collapsing the center segments and/or the side segments of the clamping device;
e) removing a vehicle tire blank from the drum.

20. The method according to claim 18 or 19,
**characterized in that**
at least one more layer of a material of the vehicle tire is applied after the sidewall strip of the tire carcass has been turned up, the center segments (12, 42) of the clamping device (11, 41) being collapsed after the application.

## Revendications

1. Tambour (10, 40) pour la production de pneus de véhicule, notamment de pneus pour des vélos, des motocyclettes, des trottinettes ou similaires, le tambour comprenant un dispositif de serrage (11, 41) ayant segments de centre (12, 42) pour tenir une carcasse du pneu et au moins un dispositif de retournement (13, 44) pour retourner une bande de la paroi latérale de la carcasse du pneu sur un noyau de boudin du pneu, le dispositif de retournement comprenant un mécanisme de levier (15, 45), le mécanisme de levier ayant une pluralité de leviers (16, 46) au moyen desquels la bande de la paroi latérale est configurée pour être retournée, les segments de centre (12, 42) ayant une longueur axiale A vers un axe longitudinal (14, 43) du tambour, les leviers (16, 46) ayant une longueur A', la longueur A' des leviers étant supérieure ou égale à la longueur A des segments de centre
**caractérisé en ce que**
la bande de la paroi latérale est configurée pour être retournée sur la longueur totale A des segments de centre au moyen du levier, le mécanisme de levier ayant une pluralité d'éléments de guide (19), les éléments de guide étant disposés entre les leviers du mécanisme de levier.

2. Tambour selon la revendication 1,
**caractérisé en ce que**
le tambour (10, 40) comprend un premier jeu de segments de centre (12, 42) et un second jeu de segments de centre (12, 42), le premier jeu de segments de centre ayant une longueur A₁ et le second jeu de segments de centre ayant une longueur A₂, A₁ étant inégal à A₂.

3. Tambour selon la revendication 1 ou la revendication 2, **caractérisé en ce que**
la longueur A des segments de centre (12, 42) est de 20 mm à 400 mm, de préférence de 40 mm à 300 mm, plus préférentiellement de 48 mm à 200 mm.

4. Tambour selon l'une quelconque des revendications précédentes, **caractérisé en ce que**
les segments de centre (12, 42) ont une base rectangulaire, les segments de centre étant pliés de telle manière qu'ils forment une partie d'une gaine extérieure d'un cylindre.

5. Tambour selon l'une quelconque des revendications précédentes, **caractérisé en ce que**
le dispositif de serrage (11, 41) comprend au moins un cylindre (20), de préférence deux cylindres ou plus, pour prendre l'expansion radialement les segments de centre (12, 42).

6. Tambour selon la revendication 5,
**caractérisé en ce que**
les segments de centre élargis (12, 42) du dispositif de serrage (11, 41) sont rappelés par le cylindre (20) et/ou au moins un ressort (53).

7. Tambour selon l'une quelconque des revendications précédentes, **caractérisé en ce que**
le dispositif de serrage (11, 41) a des segments latéraux (18, 51) qui sont disposés sur les bords axiaux des segments de centre (12, 42), une position des segments latéraux étant réglable vers l'axe longitudinal (14, 43).

8. Tambour selon la revendication 7,
**caractérisé en ce que**
les segments latéraux (18, 51) peuvent prendre l'expansion radialement et/ou peuvent rappeler avec les segments de centre (12, 42).

9. Tambour selon l'une quelconque des revendications précédentes, **caractérisé en ce que**
le dispositif de retournement (13, 44) a une unité d'actionnement (21, 47) ayant au moins un cylindre (22, 52), de préférence deux cylindres, plus préférentiellement quatre cylindres, les leviers (16, 46) du mécanisme de levier (15, 45) étant mobiles vers l'axe longitudinal (14, 43) du tambour (10, 40) au moyen du cylindre.

10. Tambour selon la revendication 9,
**caractérisé en ce que**
l'unité d'actionnement (21, 47) a une timonerie (24, 49) pour déplacer les leviers (16, 46) vers l'axe longitudinal (14, 43) du tambour (10, 40).

11. Tambour selon la revendication 10,
**caractérisé en ce que**
la timonerie (24, 49) comprend au moins une tige de guide (25) ayant au moins un appui (26, 50) pour limiter le mouvement des leviers (16, 46), une position de l'appui étant réglable vers l'axe longitudinal (14, 43) du tambour (10, 40).

12. Tambour selon la revendication 11,
**caractérisé en ce que**
la tige de guide (25) pour ajuster la position de l'appui (26, 50) est une crémaillère.

13. Tambour selon la revendication 10 ou la revendication 11, **caractérisé en ce que**
la timonerie (24, 49) a au moins une articulation (27) et/ou une liaison (28), de préférence deux articulations et une liaison disposée entre les articulations, pour faire pivoter et/ou écarter le levier (16, 46) de l'axe longitudinal (14, 43).

14. Tambour selon l'une quelconque des revendications précédentes, **caractérisé en ce que**
le dispositif de retournement (13, 44) comprend un élément de manutention ayant au moins un ressort, le ressort étant disposé sur un levier (16, 46) de telle manière que le pivotement et/ou l'écartement du levier par rapport à l'axe longitudinal (14, 43) est limitable au moyen du ressort.

15. Tambour selon l'une quelconque des revendications précédentes, **caractérisé en ce que**
le tambour a un dispositif de retournement (13, 44) supplémentaire, le dispositif de retournement supplémentaire comprenant un mécanisme de levier (15, 45) supplémentaire ayant une pluralité de leviers (16, 46) supplémentaires de telle manière qu'une bande supplémentaire de la paroi latérale de la carcasse du pneu est configurée pour être retournée au moyen des leviers supplémentaires du mécanisme de levier supplémentaire.

16. Tambour selon l'une quelconque des revendications précédentes, **caractérisé en ce que**
le tambour (10, 40) a un arbre (17, 55) et une bride qui est disposée sur une extrémité de l'arbre, le tambour étant attachable à une machine de construction de pneu par la bride.

17. Tambour selon l'une quelconque des revendications précédentes, **caractérisé en ce que**
le tambour (10, 40) comprend un dispositif (29, 54) de distribution d'air comprimé et au moins une ligne (30, 56), qui est disposée dans l'arbre (17, 55), de telle sorte que les cylindres (20, 22, 48, 52) du dispositif de retournement (13, 44) et/ou du dispositif de serrage (11, 41) sont actionnables au moyen de l'air comprimé fourni par le dispositif.

18. Procédé pour produire des pneus de véhicule, notamment des pneus pour des vélos, des motocyclettes, des trottinettes ou similaires, une carcasse du pneu étant disposée sur un tambour (10, 40) selon l'une quelconque des revendications précédentes, le tambour ayant un dispositif de serrage (11, 41) ayant des segments de centre (12, 42) au moyen desquels la carcasse est tenue , le tambour ayant un dispositif de retournement (13, 44) ayant un mécanisme de levier (15, 45) au moyen duquel une bande de la paroi latérale de la carcasse du pneu est retournée sur au moins un noyau de boudin, le retournement étant effectué au moyen de leviers (16, 46) du mécanisme de levier, les segments de centre (12, 42) retenant la carcasse du pneu sur une longueur axiale A des segments de centre vers un axe longitudinal (14, 43) du tambour (10, 40), les leviers (16, 46) ayant une longueur A', la longueur A' des leviers étant supérieure ou égale à la longueur des segments de centre,
**caractérisé en ce que**
les leviers sont déplacés sur les segments de centre pour le retournement, les leviers superposant entièrement les segments de centre (12, 42), les leviers retournant la bande de la paroi latérale de la carcasse du pneu sur la longueur totale A des segments de centre.

19. Procédé selon la revendication 18,
**caractérisé en ce que**
le procédé comprenant les étapes suivantes :
a) disposer la carcasse du pneu et le noyau de boudin sur le tambour (10, 40) ;
b) serrer la carcasse du pneu et le noyau de boudin au moyen de l'expansion radiale des segments de centre (12, 42) et/ou des segments latéraux (18, 51) du dispositif de serrage (11, 41) du tambour ;
c) retourner une bande de la paroi latérale de la carcasse du pneu sur le noyau de boudin au moyen du dispositif de retournement (13, 44) du tambour ;
d) s'effondrer les segments de centre et/ou les segments latéraux du dispositif de serrage ;
e) enlever 'une ébauche de pneu de véhicule du tambour.

20. Procédé selon la revendication 18 ou la revendication 19, **caractérisé en ce**
**qu'**au moins une couche supplémentaire d'un matériau du pneu du véhicule est appliquée après que la bande de la paroi latérale de la carcasse du pneu a été retournée, les segments de centre (12, 42) du dispositif de serrage (11, 41) s'étant effondrés après l'application.
